Europäisches Patentamt

European Patent Office

Office européen des brevets

(11) Veröffentlichungsnummer: **0 023 953**
**A1**

## (12) EUROPÄISCHE PATENTANMELDUNG

(21) Anmeldenummer: **80103179.0**

(22) Anmeldetag: **07.06.80**

(51) Int. Cl.³: **F 16 C 33/74**
**F 16 J 15/34, F 16 K 1/20**

(30) Priorität: **08.08.79 DE 7922692 U**

(43) Veröffentlichungstag der Anmeldung:
**18.02.81 Patentblatt 81/7**

(84) Benannte Vertragsstaaten:
**BE DE FR GB**

(71) Anmelder: **Krupp Polysius AG**
**Graf-Galen-Strasse 17**
**D-4720 Beckum(DE)**

(72) Erfinder: **Becker, Willi**
**Kampstrasse 30**
**D-4720 Beckum(DE)**

(72) Erfinder: **Genau, Hans**
**Am Stockpiper 51**
**D-4730 Ahlen(DE)**

(72) Erfinder: **Regente, Werner**
**Dresdner Strasse 50**
**D-4720 Beckum(DE)**

(72) Erfinder: **Prinz, Helmut**
**An den Weiden 23**
**D-4722 Ennigerloh(DE)**

(72) Erfinder: **Ueter, Johannes**
**Küperskamp 32**
**D-4730 Ahlen(DE)**

(74) Vertreter: **Tetzner, Volkmar, Dr.-Ing. Dr. jur.**
**Van-Gogh-Strasse 3**
**D-8000 München 71(DE)**

(54) **Abdichtung und Lagerung der Welle einer Pendelklappe.**

(57) Bei einer Pendelklappe wird die Welle (2) mittels einer Dichtung (4) durch das Klappengehäuse (1) nach außen geführt. Die Dichtung (4) enthält einen Schleifring (7) mit einer plangeschliffenen Dichtungsfläche (7a) und einer kalottenförmigen Lagerfläche (7b) sowie einen Druckring (9) mit einer entsprechenden kalottenförmigen Ausnehmung (9a) für die Aufnahme des Schleifringes.

EP 0 023 953 A1

./...

Pendelklappe BEZEICHNUNG GEÄNDERT
siehe Titelseite

Die Erfindung betrifft eine Pendelklappe, deren
Welle mittels einer Dichtung abgedichtet durch
eine Wand des Klappengehäuses nach außen geführt
und außerhalb des Gehäuse-Innenraumes gelagert
ist, wobei auf der Welle zwischen dem Lager und
der Dichtung eine Druckfeder angeordnet ist.

Pendelklappen verschiedener Ausführungen werden in
der Praxis zum Ein- und Austragen von Schüttgütern
aller Art bei Silos, Wärmebehandlungseinrichtungen,
Kühlern, Windsichtern und dergleichen verwendet.
Da in solchen Einrichtungen meist ein anderer Druck
als außerhalb herrscht, sollen sie verhindern, daß
Falschluft in den Raum mit niedrigerem Druck einströmen kann, wenn Schüttgut durch eine solche Pendelklappe gefördert wird. Die Erfüllung einer solchen Forderung setzt jedoch voraus, daß die zwischen
dem Lager und dem Klappengehäuse befindliche Dichtung für die Klappenwelle zuverlässig funktioniert.

Bei einer aus der Praxis bekannten Pendelklappen-
Ausführung der eingangs genannten Art kann die
zwischen Klappengehäuse und Lager angeordnete Dichtung die gewünschte Abdichtung nur bei verhältnismäßig niedrigen Temperaturen und relativ leichten
Betriebsbedingungen aufrecht erhalten; bei schwereren
Einsatzfällen und insbesondere bei höheren Betriebstemperaturen fällt die vorgesehene Dichtung in den
meisten Fällen aus. Das dabei austretende, mitunter
stark schleißende Fördergut erhöht die Undichtigkeiten noch mehr und führt zwangsläufig zu einer Zerstörung der Wellenlagerung. Hierdurch ist dann ein dichtes Abschließen der Absperrklappe selbst überhaupt nicht mehr möglich, mit der Folge, daß die gewünschte Funktion der Pendelklappe nicht mehr gegeben ist und daß innerhalb verhältnismäßig kurzer Zeit die entsprechenden Klappenteile so weit verschlissen werden, daß eine Weiterverwendung der Pendelklappe unmöglich wird.

Der Erfindung liegt daher die Aufgabe zugrunde, unter Vermeidung der aufgezeigten Mängel der bekannten Ausführung eine Pendelklappe der eingangs genannten Art zu schaffen, die sich insbesondere aufgrund ihrer bei allen Betriebsbedingungen (auch bei höheren Betriebstemperaturen) stets zuverlässig arbeitende Dichtung auszeichnet.

Diese Aufgabe wird erfindungsgemäß dadurch gelöst, daß die Dichtung einen mit einer plangeschliffenen Dichtungsfläche und einer kalottenförmigen Lagerfläche versehenen Schleifring sowie einen den Schleifring in einer entsprechenden kalottenförmigen Ausnehmung aufnehmenden Druckring enthält.

Da bei dieser erfindungsgemäßen Ausführungsform der Druckring und der vorgesehene Schleifring durch kalottenförmige Lagerflächen miteinander in Eingriff stehen, kann auch selbst bei dem Auftreten von Fluchtfehlern der Klappenwelle oder bei einem Verzug des Klappengehäuses (durch Überhitzung) stets ein überall gleichmäßiges und spaltfreies Anliegen der plangeschliffenen Dichtungsfläche des Schleifringes an seiner Gegendichtungsfläche gewährleistet werden. Auf diese Weise kann auch selbst bei extremen Betriebsbedingungen eine zuverlässige Abdichtung zwischen der entsprechenden Gehäusewand und der Klappenwelle aufrecht erhalten werden.

Gemäß einer vorteilhaften Ausgestaltung der Erfindung ist in der die Dichtung enthaltenden Wand des Klappengehäuses ein die Welle umgebender Schleiftopf fest und abgedichtet eingebaut, der eine mit der plangeschliffenen Dichtungsfläche des Schleifringes in Gleiteingriff stehende, ebenfalls plangeschliffene, ringförmige Gegendichtungsfläche aufweist. Durch eine entsprechende Anordnung dieses Schleiftopfes in der Gehäusewand können von vornherein bereits alle groben Stäube und Verunreinigungen von den Dichtungsflächen ferngehalten werden.

Es ist dabei ferner vorteilhaft, wenn auf der der kalottenförmigen Ausnehmung axial entgegengesetzten Seite des Druckringes eine Ausdrehung zur Aufnahme eines statischen Dichtungselements zwischen Welle und Druckring vorgesehen ist. Hierdurch wird eine besonders zuverlässige Abdichtung des zwischen Welle und Druckring vorhandenen Ringspaltes geschaffen.

Wenn ferner als statisches Dichtungselement ein Gewebering, vorzugsweise ein Asbest-Molykote-Gewebe-Ring, in die Ausdrehung des Druckringes eingesetzt ist, dann kann diese Dichtwirkung auch unverändert aufrecht erhalten werden, wenn ein eventuelles axiales Verschieben der Welle auftritt.

BAD ORIGINAL

Nach einer zweckmäßigen Weiterbildung der Erfindung weist der als statisches Dichtungselement verwendete Gewebering in axialer Richtung die äußere Form eines Kegelstumpfes und die Druckring-Ausdrehung eine dazu korrespondierende Form auf, wobei die Druckfeder über den Gewebering auf den Druckring einwirkt. Hierdurch wird dann einerseits die notwendige Anpreßkraft des Schleifringes (über den Druckring) auf die Gegendichtungsfläche erzeugt und andererseits wird gleichzeitig eine ständig ausreichende Vorspannung auf den Gewebering ausgeübt, so daß also über die Druckfeder sowohl die statische Abdichtung als auch die dynamische Abdichtung zuverlässig gewährleistet ist.

Erfindungsgemäß ist es ferner besonders günstig, daß sich die Dichtungsteile vom Schleiftopf ausgehend axial in Richtung auf das zugehörige, auf der Außenseite der entsprechenden Gehäusewand vorgesehene Lager aufbauen. Auf diese Weise ist nicht nur das Lager, sondern auch die Dichtung zu einem wesentlichen Teil außerhalb des Gehäuses angeordnet, so daß diese Teile nicht nur den im Gehäuse-Innenraum vorhandenen, besonders staubbeladenen Luftströmen, sondern auch dem heißeren Betriebsbereich entrückt sind.

Die erfindungsgemäße Ausführung läßt sich besonders einfach montieren, wenn das Lager zusammen mit dem Flansch des Schleiftopfes an der Wand des Klappengehäuses verschraubt ist.

0023953

Ferner hat es sich bei dieser erfindungsgemäßen Pendelklappe als besonders vorteilhaft erwiesen, wenn neben der genannten Dichtung als Lager für die Klappenwelle ein Radial-Gelenklager vorgesehen ist. Es hat sich nämlich gezeigt, daß aufgrund der ungünstigen mechanischen Belastungen und der möglichen hohen Betriebstemperaturen eine solche Lagerart die Wirksamkeit der Dichtung begünstigt. Ein solches Lager kann nämlich auch unter extremen Bedingungen weitgehend wartungsfrei arbeiten und ebenfalls eventuell vorhandene oder entstehende Fluchtfehler der Welle oder Gehäuseverzüge (durch Überhitzung) selbsttätig ausgleichen.

Generell sei noch darauf hingewiesen, daß es sich bei einer erfindungsgemäßen Pendelklappe sowohl um eine einfache Pendelklappe (also mit nur einer einzigen Dichtungsklappe im Innern des Gehäuses) als auch um eine Doppel-Pendelklappe handeln kann, bei der dann also durch abwechselnde Pendelbewegungen der beiden übereinander im Gehäuse angeordneten Abdichtungsklappen ein schleusenartiger Einlaß- oder Auslaßeffekt erzielt wird. Für jede im Innern des Klappengehäuses pendelnd aufgehängte Abdichtungsklappe ist dann selbstverständlich eine Welle vorhanden, die üblicherweise durch gegenüberliegende Gehäusewände abgedichtet hindurchgeführt und dann außerhalb des eigentlichen Gehäuses gelagert ist.

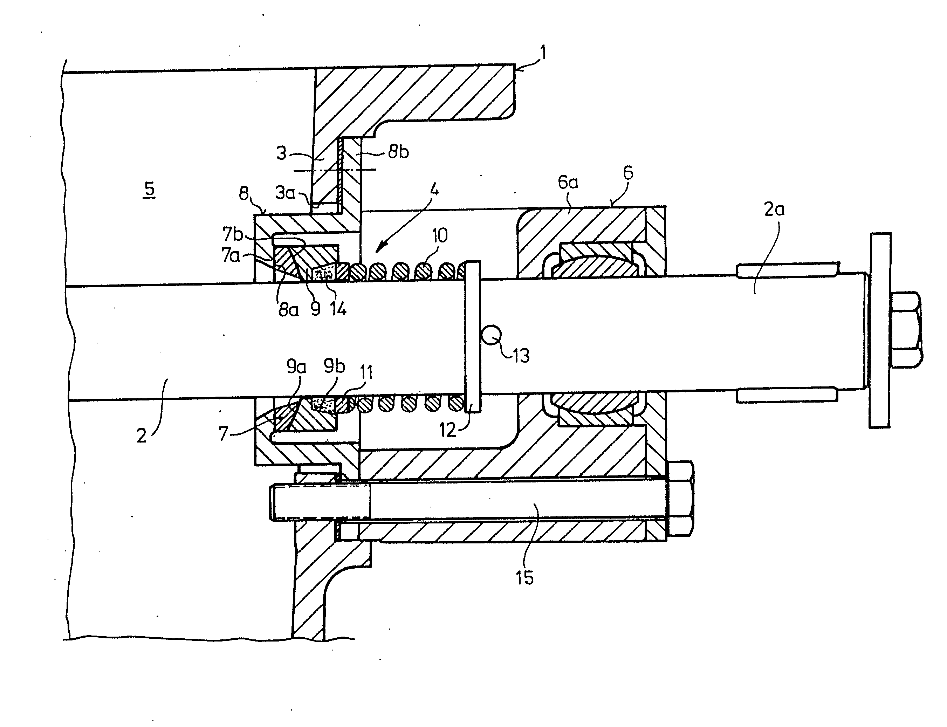

Im folgenden sei ein Ausführungsbeispiel der Erfindung anhand der Zeichnung beschrieben.

Die Zeichnung zeigt lediglich eine Teil-Schnittansicht durch eine erfindungsgemäß ausgeführte Pendelklappe, und zwar im Bereich einer von der Klappenwelle durchsetzten Gehäusewand.

Von der Pendelklappe sind - wie bereits angedeutet - lediglich die für die Erläuterung der Erfindung wesentlichen Teile veranschaulicht. Die Pendelklappe enthält ein Klappengehäuse 1, eine Klappenwelle 2, die durch die Klappengehäusewand 3 nach außen geführt ist, eine Dichtung 4 und ein außerhalb des Gehäuse-Innenraumes 5 liegendes Lager 6; das axial nach außen aus dem Lager 6 herausragende Wellenende 2a kann in üblicher Weise mit einer nicht näher veranschaulichten Antriebseinrichtung in Verbindung stehen.

Ein wesentlicher Bestandteil dieser Erfindung ist die Ausführung und Anordnung der Dichtung 4, die das Gehäuse-Innere 5 an der Durchführungsstelle der Welle 2 durch die Gehäusewand 3 abdichtet.

Diese Dichtung 4 enthält zunächst als einen wesentlichen Bestandteil einen Schleifring 7, der die Welle 2 mit Abstand umgibt und aus einem zweckmäßigen, temperaturbeständigen Material (z.B. temperaturbeständigen Stahl) hergestellt ist.Auf seiner zum Gehäuse-Innenraum 5 hinweisenden Stirnseite besitzt der Schleifring 7 eine plangeschliffene Dichtungsfläche 7a, während er auf seiner axial entgegengesetzten Seite eine kalottenförmige Lagerfläche 7b aufweist. Mit seiner plangeschliffenen Dichtungsfläche 7a steht der Schleifring 7 in Dichtungs-Gleiteingriff mit einer ebenfalls plangeschliffenen, ringförmigen Gegendichtungsfläche 8a eines die Welle 2 mit Abstand umgebenden Schleiftopfes 8, der in eine entsprechende Öffnung 3a der Gehäusewand 3 eingebaut ist. Die kalottenförmige Lagerfläche 7b des Schleifringes 7 steht dagegen in Eingriff mit einer entsprechend ausgebildeten kalottenförmigen Ausnehmung 9a eines die Welle 2 mit geringem Spiel umgebenden Druckringes 9.

Der Druckring 9 steht unter der Wirkung einer Druckfeder 10, die vorzugsweise als temperaturbeständige, zylindrische Schraubenfeder ausgebildet ist, zwischen zwei die Welle 2 umgebenden Ringen 11, 12 angeordnet und durch einen die Welle 2 durchsetzenden Querstift 13 in ihrer Vorspannung gesichert ist.

Die Druckfeder 10 wirkt jedoch nicht direkt auf den Druckring 9, sondern unter Zwischenschaltung eines statischen Dichtungselementes 14, das auf der der kalottenförmigen Ausnehmung 9a axial entgegengesetzten Seite des Druckringes in einer Ausdrehung 9b dieses Druckringes aufgenommen ist und einen eventuell vorhandenen Ringspalt zwischen Welle 2 und Druckring 9 abdichtet. Dieses statische Dichtungselement wird vorzugsweise durch einen Asbest-Molykote-Gewebering 14 gebildet, der - wie die Zeichnung deutlich zeigt - in axialer Richtung die äußere Form eines Kegelstumpfes besitzt, während dementsprechend die Druckring-Ausdrehung 9b eine dazu korrespondierende Form aufweist. Durch die Druckfeder 10 wird somit zunächst einmal der statische Dichtungs-Gewebering 14 unter stets ausreichender Vorspannung in die Druckring-Ausdrehung 9b gedrückt; gleichzeitig wird dabei dann der notwendige Druck auf den Druckring 9 selbst ausgeübt, der diesen Druck wiederum auf den Schleifring 7 überträgt, so daß dieser Schleifring 7 mit seiner plangeschliffenen Dichtungsfläche 7a stets ausreichend fest an der Gegendichtungsfläche 8a des Schleiftopfes 8 anliegt.

Aus der Zeichnung läßt sich weiterhin gut erkennen, daß sich die Dichtungsteile alle vom Schleiftopf 8 ausgehend axial in Richtung auf das zugehörige Lager 6 aufbauen. Auf diese Weise ist also der wesentliche Teil der Dichtung 4 gegenüber dem Gehäuse-Innenraum 5 geschützt und nach außen hin angeordnet, so daß diese Anordnung bereits für eine besonders staub- und temperaturgeschützte Lage sorgt.

Das gegenüber der Dichtung noch weiter außerhalb des Gehäuse-Innenraumes 5 angeordnete Lager 6 kann durch sein Gehäuse 6a zusammen mit dem Außenflansch 8b des Schleiftopfes 8 an der Gehäusewand 3 mittels Schrauben 15 verschraubt sein.

Das in dieser äußeren Anordnung besonders staub- und temperaturgeschützte Lager 6 ist vorzugsweise als Radial-Gelenk-Lager ausgeführt, so daß es jegliche Fluchtfehler besonders gut ausgleichen kann. Letzteres ist besonders auch im Zusammenhang mit der erfindungsgemäßen Dichtung 4 von Vorteil, bei der aufgrund der kalottenförmig ausgebildeten Lagerflächen 7b und 9a vom Schleifring 7 und Druckring 9 eine eventuelle Relativ-Verlagerung zwischen Welle 3 und Gehäuse 1 ausgeglichen und somit stets eine zuverlässige Abdichtung zwischen Schleifring 7 und Schleiftopf 8 (an ihren Dichtflächen 7a und 8a) aufrecht erhalten wird.

Patentansprüche:

1. Pendelklappe, deren Welle mittels einer Dichtung abgedichtet durch eine Wand des Klappengehäuses nach außen geführt und außerhalb des Gehäuse-Innenraumes gelagert ist, wobei auf der Welle zwischen dem Lager und der Dichtung eine Druckfeder angeordnet ist, dadurch gekennzeichnet, daß die Dichtung ( 4) einen mit einer plangeschliffenen Dichtungsfläche (7a) und einer kalottenförmigen Lagerfläche (7b) versehenen Schleifring (7) sowie einen den Schleifring in einer entsprechenden kalottenförmigen Ausnehmung (9a) aufnehmenden Druckring (9) enthält.

2. Pendelklappe nach Anspruch 1, dadurch gekennzeichnet, daß in der die Dichtung (4) enthaltenden Wand (3) des Klappengehäuses (1) ein die Welle (2) umgebender Schleiftopf (8) fest und abgedichtet eingebaut ist, der eine mit der plangeschliffenen Dichtungsfläche (7a) des Schleifringes (7) in Gleiteingriff stehende, ebenfalls plangeschliffene, ringförmige Gegendichtungsfläche (8a) aufweist.

3. Pendelklappe nach Anspruch 1, dadurch gekennzeichnet, daß auf der der kalottenförmigen Ausnehmung (9a) axial entgegengesetzten Seite des Druckringes (9) eine Ausdrehung (9b) zur Aufnahme eines statischen Dichtungselements (14) zwischen Welle (2) und Druckring (9) vorgesehen ist.

- 2 -

4. Pendelklappe nach Anspruch 3, dadurch gekennzeichnet, daß als statisches Dichtungselement ein Gewebering (14), vorzugsweise ein Asbest-Molykote-Gewebering, in die Ausdrehung (9b) des Druckringes (9) eingesetzt ist.

5. Pendelklappe nach den Ansprüchen 3 und 4, dadurch gekennzeichnet, daß der als statisches Dichtungselement verwendete Gewebering (14) in axialer Richtung die äußere Form eines Kegelstumpfes und die Druckring-Ausdrehung (9b) eine dazu korrespondierende Form aufweist, wobei die Druckfeder (10) über den Gewebering (14) auf den Druckring (9) einwirkt.

6. Pendelklappe nach Anspruch 5, dadurch gekennzeichnet, daß die Druckfeder als temperaturbeständige, zylindrische Schraubenfeder (10) ausgebildet, zwischen zwei die Welle umgebenden Ringen (11, 12) angeordnet und durch einen die Welle (2) durchsetzenden Querstift (13) in ihrer Vorspannung gesichert ist.

7. Pendelklappe nach den vorhergehenden Ansprüchen, dadurch gekennzeichnet, daß sich die Dichtungsteile vom Schleiftopf (8) ausgehend axial in Richtung auf das zugehörige, auf der Außenseite der entsprechenden Gehäusewand (3) vorgesehene Lager (6) aufbauen.

8. Pendelklappe nach Anspruch 7, dadurch gekennzeichnet, daß das Lager (6) zusammen mit dem Flansch (8b) des Schleiftopfes (8) an der

0023953

Wand (3) des Klappengehäuses (1) verschraubt ist.

9. Pendelklappe nach den Ansprüchen 7 und 8, dadurch gekennzeichnet, daß als Lager für die Klappenwelle (2) ein Radial-Gelenk-Lager (6) vorgesehen ist.

1/1

0023953

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | GB - A - 1 451 874 (JOHNSON CORP.) <br> * Seite 3, Zeilen 10 bis 21; Fig. 2 * <br> -- | 1,6 |
| | US - A - 2 222 612 (L.D. GOFF) <br> * Fig. 1 * <br> -- | 1,2,9 |
| | US - A - 2 744 774 (E.B. WIST) <br> * Fig. 1 bis 3 * <br> -- | 1,3,4, 6,7 |
| | US - A - 4 022 424 (D.H. DAVIS et al.) <br> * Fig. * <br> -- | 7,9 |
| P,X | DE - U1 - 7 922 692 (POLYSIUS AG) <br> * gesamtes Dokument * <br> -- | 1-9 |
| A | US - A - 3 070 377 (K. EICKMANN) <br> * gesamtes Dokument * <br> -- | |
| A | US - A - 3 749 358 (C. BATES) <br> * gesamtes Dokument * <br> ---- | |

**KLASSIFIKATION DER ANMELDUNG (Int.Cl.3)**

F 16 C 33/74

F 16 J 15/34

F 16 K 1/20

**RECHERCHIERTE SACHGEBIETE (Int. Cl.3)**

F 16 C 33/00

F 16 J 15/00

F 16 K 1/00

F 16 K 41/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 27-10-1980 | MASSALSKI |

EPA form 1503.1   06.78